# EUROPEAN PATENT APPLICATION

(11) **EP 4 819 230 A1**
(43) Date of publication of application: **07.10.2026**
(21) Application number: 24902046.2
(22) Date of filing: 05.06.2024
(51) Int. Cl.: H01M 4/36, H01M 4/38

(54) **SILICON-CARBON COMPOSITE MATERIAL AND PREPARATION METHOD THEREFOR, NEGATIVE ELECTRODE SHEET, SECONDARY BATTERY, AND DEVICE**

(30) Priority: 14.12.2023 CN 202311728656
(71) Applicant: Contemporary Amperex Technology Co., Limited, Ningde, Fujian 352100 (CN)
(72) Inventor: CHEN, Wenqiang, Ningde, Fujian 352100 (CN); WANG, Jiazheng, Ningde, Fujian 352100 (CN); LV, Zijian, Ningde, Fujian 352100 (CN)
(74) Representative: Kraus & Lederer PartGmbB
(86) International application number: PCT/CN2024/097567
(87) International publication number: WO 2025/123617

(57) **Abstract**

The present disclosure relates to a silicon-carbon composite material and a preparation method therefor, a negative electrode sheet, a secondary battery, and a device, where the silicon-carbon composite material includes a carbon matrix having a pore structure and a silicon-based material distributed in the pore structure of the carbon matrix, and the silicon-carbon composite material contains a phosphorus element. The silicon-based material in the silicon-carbon composite material improves the capacity of the carbon matrix, and the carbon matrix having the pore structure can also serve as a buffer medium for volume expansion of the silicon-based material during charging and discharging while improving the conductivity of the silicon-based material, thereby effectively alleviating the problem of the increase in the volume of the secondary battery due to the expansion of silicon; moreover, the phosphorus element doped in a framework of the carbon matrix is beneficial to improving the electronic conductivity of the material, thereby improving the cycle performance of the battery.

## Description

### CROSS-REFERENCE TO RELATED APPLICATIONS

The present disclosure claims priority to Chinese Patent Application No. 202311728656.0, filed on December 14, 2023 and entitled "Silicon-carbon Composite Material And Preparation Method Therefor, Negative Electrode Sheet, Secondary Battery, And Device", which is incorporated herein by reference in its entirety.

### TECHNICAL FIELD

The present disclosure relates to the technical field of lithium ion batteries, and in particular, to a silicon-carbon composite material and a preparation method therefor, a negative electrode sheet, a secondary battery, and a device.

### BACKGROUND

The statement here merely provides the background information related to the present disclosure and does not necessarily constitute the prior art.

In recent years, as the application range of lithium ion batteries becomes wider, the lithium ion batteries are widely used in various fields such as energy storage power systems such as hydraulic power stations, thermal power stations, wind power stations, and solar power stations, as well as a plurality of fields such as power tools, electric bicycles, electric motorcycles, electric vehicles, military equipment, and aerospace. With the continuous development of lithium ion battery technology, users put forward higher and higher requirements on the energy density of lithium ion batteries. A silicon-based material is widely used in lithium ion batteries due to their high capacity, but as a result of the characteristic of high expansion of the silicon-based material, the silicon-based material is powdered in structure and detached from the current collector during charging and discharging of the batteries, resulting in loss of activity, and the silicon-based material has poor conductivity. Therefore, the silicon-based material will not only improve the energy density of the lithium ion battery, but also affect the cycle performance of the secondary battery, which limits the further development of the lithium ion battery technology.

### SUMMARY

The present disclosure provides a silicon-carbon composite material and a preparation method thereof, a negative electrode sheet, a secondary battery, and a device, so as to alleviate the expansion of the silicon-based material and improve the cycle performance of the battery.

In order to achieve the above objective, a first aspect of the present disclosure provides a silicon-carbon composite material, including:
a carbon matrix, where the carbon matrix has a pore structure; and
a silicon-based material, distributed in the pore structure of the carbon matrix, where
the silicon-carbon composite material contains a phosphorus element.

Therefore, the silicon-based material in the silicon-carbon composite material of the present disclosure improves the capacity of the carbon matrix, and the carbon matrix having the pore structure can also serve as a buffer medium for volume expansion of the silicon-based material during charging and discharging while improving the conductivity of the silicon-based material, thereby effectively alleviating the problem of the increase in the volume of the secondary battery due to the expansion of silicon; moreover, the phosphorus element contained in the silicon-carbon composite material is beneficial to improving the electronic conductivity of the material, thereby improving the cycle performance of the silicon-carbon composite material.

In some embodiments, a mass proportion of the phosphorus element in the silicon-carbon composite material is 5 ppm to 80 ppm, optionally 10 ppm to 50 ppm.

In some embodiments, the silicon-carbon composite material further contains at least one of an aluminum element and a potassium element.

In some embodiments, the silicon-carbon composite material further contains the aluminum element, and a mass proportion of the phosphorus element in the silicon-carbon composite material is greater than a mass proportion of the aluminum element in the silicon-carbon composite material.

In some embodiments, the silicon-carbon composite material further contains the potassium element, and a mass proportion of the phosphorus element in the silicon-carbon composite material is greater than a mass proportion of the potassium element in the silicon-carbon composite material.

In some embodiments, the silicon-carbon composite material further contains the aluminum element and the potassium element, and a mass proportion of the aluminum element in the silicon-carbon composite material is less than a mass proportion of the potassium element in the silicon-carbon composite material.

In some embodiments, the silicon-carbon composite material further contains the aluminum element, and the mass proportion of the aluminum element in the silicon-carbon composite material is 5 ppm to 80 ppm, optionally 10 ppm to 40 ppm.

In some embodiments, the silicon-carbon composite material further contains the potassium element, and the mass proportion of the potassium element in the silicon-carbon composite material is 5 ppm to 80 ppm, optionally 10 ppm to 70 ppm.

In some embodiments, the silicon-based material has one or more of the following features:
(1) a grain size of the silicon-based material has is ≤8 nm, optionally ≤5 nm, and more optionally 1 nm to 4 nm;
(2) the silicon-based material comprises one or more of elemental silicon, a silicon oxide compound, a silicon-carbon compound, and a silicon alloy; and
(3) a shape of the silicon-based material comprises one or more of a spherical shape, a spheroidal shape, a sheet shape, and a linear shape.

In some embodiments, the carbon matrix has one or more of the following features:
(1) an average pore diameter of the pore structure is 0.5 nm to 8 nm, optionally 0.5 nm to 5 nm;
(2) the pore structure comprises micropores, and an average pore diameter d1 of the micropores satisfies 0.5 nm≤d1<2 nm;
(3) the pore structure comprises mesopores, and an average pore diameter d2 of the mesopores satisfies 2 nm≤d2≤8 nm;
(4) the pore structure comprises micropores, and the number of the micropores in the pore structure is 60% to 90%, optionally 70% to 80%; and
(5) a specific surface area of the carbon matrix is 500 m²/g to 2,000 m²/g, optionally 1,000 m²/g to 1,800 m²/g.

In some embodiments, the silicon-carbon composite material has one or more of the following features:
(1) a volume-distributed particle size Dv50 of the silicon-carbon composite material is 3 µm to 15 µm, optionally 5 µm to 12 µm;
(2) the Volume-Distributed Particle Size Dv90 of the silicon-carbon composite material is ≤35 µm, optionally 15 µm to 25 µm;
(3) a particle size distribution of the silicon-carbon composite material satisfies 1≤(Dv90-Dv10)/Dv50≤3, optionally 1≤(Dv90-Dv10)/Dv50≤2;
(4) a specific surface area of the silicon-carbon composite material is 1 m2/g to 10 m2/g, optionally 2 m2/g to 6 m2/g;
(5) a tap density of the silicon-carbon composite material is 0.8 g/cm3 to 1.2 g/cm3, optionally 0.85 g/cm3 to 1.0 g/cm3;
(6) powder resistivity of the silicon-carbon composite material at 16 MPa is ≤5Ω·cm, optionally ≤2Ω·cm; and
(7) a mass proportion of the silicon element in the silicon-carbon composite material is 20% to 60%, optionally 30% to 50%.

In some embodiments, at least a part of a surface of the silicon-carbon composite material is provided with a coating layer, and optionally, the coating layer is a carbon coating layer.

In some embodiments, the carbon coating layer has one or more of the following features:
(1) a material of the carbon coating layer comprises amorphous carbon; and
(2) a thickness of the carbon coating layer is 50 nm to 200 nm.

In some embodiments, the phosphorus element is distributed in the carbon matrix; and/or, at least one of the aluminum element and the potassium element is distributed in the carbon matrix.

A second aspect of the present disclosure provides a method for preparing a silicon-carbon composite material in the first aspect of the present disclosure, including the following steps:
mixing a carbon material precursor with a phosphorus-containing compound and sintering the mixture to prepare a carbon matrix having a pore structure; and
depositing the silicon-based material in a pore structure of the carbon matrix to prepare the silicon-carbon composite material.

The method for preparing the silicon-carbon composite material provided by the present disclosure has a simple process, can realize one step pore formation and obtain pores with a relatively uniform size, and the phosphorus element can be doped into the framework of the carbon matrix.

In some embodiments, a mass ratio of the carbon material precursor to the phosphorus-containing compound is 100:(3-15), optionally 100:(4-10).

In some embodiments, a temperature for the sintering is 600°C to 1000°C, optionally 600°C to 900°C.

In some embodiments, time for the sintering is 1 h to 12 h, optionally 4 h to 8 h.

In some embodiments, conditions for preparing the carbon matrix include one or more of the following conditions:
(1) mixing the carbon material precursor with the phosphorus-containing compound includes mixing the carbon material precursor with a solvent containing the phosphorus-containing compound, where
   optionally, the carbon material precursor is mixed with the solvent containing the phosphorus-containing compound and allowed to stand;
   Further optionally, the standing time is 12 h to 24 h;
(2) the phosphorus-containing compound includes one or more of phosphoric acid, potassium phosphate, sodium phosphate, calcium dihydrogen phosphate or potassium dihydrogen phosphate;
(3) the carbon material precursor includes one or more of biomass hard carbon or a resin-based carbon material;
(4) the carbon material precursor includes at least one of an aluminum element or a potassium element; and
   Optionally, the carbon material precursor includes the aluminum element, and a mass proportion of the aluminum element in the carbon material precursor is 5 ppm to 80 ppm, optionally 6 ppm to 60 ppm;
   optionally, the carbon material precursor includes the potassium element, and a mass proportion of the potassium element in the carbon material precursor is 5 ppm to 80 ppm, optionally 6 ppm to 60 ppm;
(5) an atmosphere of the sintering comprises one or more of an inert gas and nitrogen;
   optionally, an atmosphere of the sintering includes one or more of an inert gas and nitrogen.

In some embodiments, the step of depositing the silicon-based material layer in the pore structure of the carbon matrix includes:
placing the carbon matrix in a mixed gas containing a silicon source and a first protective gas, and performing first vapor deposition to deposit the silicon-based material in the pore structure of the carbon matrix.

In some embodiments, the first vapor deposition includes one or more of the following conditions:
(1) a temperature of the first vapor deposition is 400°C to 800°C, optionally 500°C to 700°C, and more optionally 500°C to 600°C;
(2) time for the first vapor deposition is 1 h to 12 h, optionally 4 h to 8 h;
(3) a volume proportion of the silicon source in the mixed gas is 10% to 50%;
(4) a volume proportion of the first protective gas in the mixed gas is 30% to 85%;
(5) a positive difference between a pressure of the first vapor deposition and an atmospheric pressure is 200 Pa to 600 Pa;
(6) the silicon source gas comprises one or more of monosilane, disilane, and trisilane; and
(7) the first protective gas includes one or more of nitrogen and argon.

In some embodiments, the mixed gas further includes a first carbon source.
In some embodiments, a volume proportion of the first carbon source in the mixed gas is 5% to 20%;

In some embodiments, a volume ratio of the silicon source to the first carbon source is (2-10): 1.

In some embodiments, the first carbon source includes one or more of methane, ethylene, and acetylene.

In some embodiments, after the step depositing the silicon-based material layer in the pore structure of the carbon matrix, the method further includes:
placing the carbon matrix in a mixed gas containing a second carbon source and a second protective gas, and performing second vapor deposition to form the carbon coating layer on at least a part of an outer surface of the carbon matrix.

In some embodiments, the second vapor deposition include one or more of the following conditions:
(1) a temperature for the second vapor deposition is 500°C to 900°C;
(2) time for the second vapor deposition is 1 h to 6 h;
(3) a volume proportion of the second carbon source in the mixed gas is 5% to 50%, and the sum of the volume proportion of the second carbon source and the volume proportion of the second protective gas in the mixed gas is 100%;
(4) the second carbon source comprises one or more of methane, ethylene and acetylene; and
(5) the second protective gas includes one or more of nitrogen and argon.

A third aspect of the present disclosure provides a negative electrode sheet, including:
a negative electrode current collector; and
a negative electrode active material layer, located on at least one side of the negative electrode current collector, where the negative electrode active material layer includes the silicon-carbon composite material in the first aspect of the present disclosure or the silicon-carbon composite material prepared by the method in the second aspect of the present disclosure.

A fourth aspect of the present disclosure provides a secondary battery, including the negative electrode sheet in the third aspect of the present disclosure.

The secondary battery of the present disclosure includes the silicon-carbon composite material provided by the present disclosure, and has excellent cycle performance.

A fifth aspect of the present disclosure provides an electrical device, including the secondary battery in the fourth aspect of the present disclosure.

The electrical device in the present disclosure includes the secondary battery provided by the present disclosure, and thus has at least the same advantages as the secondary battery.

Details of one or more embodiments of the present disclosure are set forth in the accompanying drawings and the description below. Other features, objectives, and advantages of the present disclosure will be apparent from the specification, and the accompanying drawings, and the claims.

### DESCRIPTION OF DRAWINGS

To better describe and illustrate embodiments or examples provided by the present disclosure, reference may be made to one or more accompanying drawings. Additional details or examples used to describe the accompanying drawings should not be considered as limiting the scope of any of the disclosed application, the currently described embodiments or examples, and best modes of these applications as currently understood. Moreover, the same reference numerals are used to denote the same components throughout the accompanying drawings. In the accompanying drawings:
FIG. 1 is a schematic diagram of a battery cell according to an embodiment of the present disclosure.
FIG. 2 is an exploded view of the battery cell shown in FIG. 1 according to an implementation of the present disclosure.
FIG. 3 is a schematic diagram of a battery module according to an embodiment of the present disclosure.
FIG. 4 is a schematic diagram of a battery pack according to an embodiment of the present disclosure.
FIG. 5 is an exploded view of the battery pack shown in FIG. 4 according to an embodiment of the present disclosure.
FIG. 6 is a schematic diagram of an electrical device using a secondary battery as a power supply according to an embodiment of the present disclosure.

### Description of reference signs:

1: battery pack; 2: upper case; 3: lower case; 4: battery module; 5: battery cell; 51; housing; 52: electrode assembly; 53: cover plate; and 6: electrical device.

### DESCRIPTION OF EMBODIMENTS

The silicon-carbon composite material and a preparation method therefor, a negative electrode sheet, a secondary battery, and an electrical device in the present disclosure are described in detail below with appropriate reference to the accompanying drawings. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. In addition, the accompanying drawings and the following descriptions are provided for those skilled in the art to fully understand the present disclosure, and are not intended to limit the subject matter described in the claims.

The "range" disclosed in the present disclosure may be defined in the form of a lower limit and an upper limit. A given range is limited by selecting a lower limit and an upper limit, which define boundaries of a special range. A range defined in this manner may include an end value or may not include an end value, any end value may be independently included or not included, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the smallest values 1 and 2 of a range are listed, and if the largest values 3, 4 and 5 of the range are listed, the following ranges are all expected: 1 to 3, 1 to 4, 1 to 5, 2 to 3, 2 to 4, and 2 to 5. In the present disclosure, unless otherwise stated, a numerical range "a to b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer≥2, it is equivalent to listing that the parameter is an integer such as 2, 3, 4, 5, 6, 7, 8, 9, 10, 11, or 12. For example, when a parameter is expressed as an integer sleeted from "2 to 10", it is equivalent to listing integers 2, 3, 4, 5, 6, 7, 8, 9, and 10.

Unless otherwise defined, "a plurality of", "a variety of", and the like related in the present disclosure mean a number of two or more. For example, "one or more" means one or greater than or equal to two.

Unless otherwise specified, all embodiments and optional embodiments of the present disclosure may be combined with each other to form new technical solutions.

The "embodiment" mentioned herein means that a particular feature, structure, or characteristic described with reference to the embodiment may be included in at least one embodiment or implementation of the present disclosure. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments. The "implementation" mentioned herein has a similar understanding.

Those skilled in the art may understand that, in the method of each implementation or embodiment, a writing order of each step does not mean a strict execution order to constitute any limitation on an implementation process, and a detailed execution order of each step should be determined by its function and possible internal logic. Unless otherwise specified, all steps in the present disclosure may be performed sequentially or randomly, preferably sequentially. For example, the method includes steps (a) and (b), which indicates that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

In the present disclosure, in open technical features or technical solutions described by the words such as "contain", "include", and "comprise", unless otherwise specified, additional members other than the listed members are not excluded, and it may be considered that both closed features or solutions composed of the listed members and open features or solutions further including additional members in addition to the listed members are provided. For example, A includes a1, a2, and a3, and may further include another member or may not include an additional member unless otherwise specified, and it may be considered that both a feature or solution in which "A consists of a1, a2, and a3" and a feature or solution in which "A includes not only a1, a2, and a3 but also another member" are provided. In the present disclosure, unless otherwise specified, A (e.g., B) means that B is a non-limiting example of A, and it may be understood that A is not limited to B.

In the present disclosure, "optionally", "optional", and "option" mean that there is or not, that is, mean any one of two parallel solutions: "with" or "without". If "option" occurs repeatedly in a technical solution, each "option" is independent, unless otherwise specified without inconsistency or mutual restriction.

The silicon-based material is widely used in the secondary battery. However, due to the characteristic of high expansion and poor conductivity of the silicon-based material, the silicon-based material will also affect the cycle performance of the secondary battery while improving the energy density of the lithium ion battery.

Based on the above problems, in the present disclosure, the carbon material precursor and the solution containing the phosphoric acid substance are mixed and heated and sintered, the phosphoric acid substance helps to open the cell wall framework of the carbon source precursor during sintering, so that one step pore formation is achieved and the obtained pores are relatively uniform in size, and the carbon matrix with an appropriate pore structure is prepared, and meanwhile, the phosphorus element is doped into the framework of the carbon matrix, which helps to improve the electronic conductivity of the silicon-carbon composite material and improve the cycle performance of the material.

The first aspect of the present disclosure provides a silicon-carbon composite material, including a carbon matrix having a pore structure and a silicon-based material distributed in the pore structure of the carbon matrix, where the silicon-carbon composite material contains a phosphorus element.

It should be noted that the carbon matrix mentioned above refers to a carbon-based material having a pore structure on the outer surface and/or inside thereof, and the number of pore structures contained in the carbon matrix may be one or more.

The silicon-carbon composite material includes a silicon-based material distributed in the pore structure of the carbon matrix, and may further include a silicon-based material distributed on a surface of a scaffold of the carbon matrix.

Understandably, the silicon-carbon composite material of the present disclosure includes the carbon matrix having a pore structure and the silicon-based material distributed in the pore structure, the silicon-based material improves the capacity of the carbon matrix, and the carbon matrix having the pore structure improves the conductivity of the silicon-based material, and can also serve as a buffer medium for volume expansion of the silicon-based material during charging and discharging; and the phosphorus element contained in the silicon-carbon composite material helps to improve the electronic conductivity of the material, thereby improving the cycle performance of the battery.

In some embodiments, a mass proportion of the phosphorus element in the silicon-carbon composite material is 5 ppm to 80 ppm, for example, may be, but is not limited to, 3 ppm, 5 ppm, 10 ppm, 15 ppm, 20 ppm, 25 ppm, 30 ppm, 35 ppm, 40 ppm, 45 ppm, 50 ppm, 55 ppm, 60 ppm, 65 ppm, 70 ppm, 75 ppm, 80 ppm, or a range between any two aforementioned values. When the mass proportion of the phosphorus element in the silicon-carbon composite material is within the aforementioned range, the cycle performance of the battery may be further improved.

As an example, the mass proportion of the phosphorus element in the silicon-carbon composite material may be, but is not limited to, 10 ppm to 80 ppm, 15 ppm to 80 ppm, 20 ppm to 80 ppm, 25 ppm to 70 ppm, 30 ppm to 60 ppm, 35 ppm to 50 ppm, 35 ppm to 45 ppm, 10 ppm to 60 ppm, 10 ppm to 35 ppm, 10 ppm to 45 ppm, 45 ppm to 60 ppm, 35 ppm to 60 ppm, 35 ppm to 80 ppm, 45 ppm to 80 ppm, 60 ppm to 80 ppm, 5 ppm to 10 ppm, 5 ppm to 35 ppm, or 5 ppm to 45 ppm, or the like.

In some optional embodiments, the mass proportion of the phosphorus element in the silicon-carbon composite material is 10 ppm to 50 ppm.

In some embodiments, at least one of the aluminum element and the potassium element is also distributed in the framework of the carbon matrix. Therefore, the introduction of the Al element and/or the potassium element may improve the electronic conductivity of the carbon matrix, and meanwhile, the doping of the Al element and/or the potassium element may be used as an attractant to improve the uniformity of silicon deposition.

In some embodiments, the silicon-carbon composite material further contains the aluminum element, and the mass proportion of the phosphorus element in the silicon-carbon composite material is greater than the mass proportion of the aluminum element in the silicon-carbon composite material.

In some embodiments, the silicon-carbon composite material further contains the potassium element, and a mass proportion of the phosphorus element in the silicon-carbon composite material is greater than a mass proportion of the potassium element in the silicon-carbon composite material.

In some embodiments, the silicon-carbon composite material further contains the aluminum element and the potassium element, and a mass proportion of the aluminum element in the silicon-carbon composite material is less than a mass proportion of the potassium element in the silicon-carbon composite material.

In some embodiments, the silicon-carbon composite material further contains the aluminum element, and a mass proportion of the aluminum element in the silicon-carbon composite material is 5 ppm to 80 ppm, for example, 5 ppm, 7 ppm, 10 ppm, 13 ppm, 15 ppm, 17 ppm, 20 ppm, 23 ppm, 25 ppm, 27 ppm, 30 ppm, 33 ppm, 35 ppm, 37 ppm, 40 ppm, 43 ppm, 45 ppm, 47 ppm, 50 ppm, 53 ppm, 55 ppm, 57 ppm, 60 ppm, 63 ppm, 65 ppm, 67 ppm, 70 ppm, 73 ppm, 75 ppm, 77 ppm, 80 ppm, or a range between any two aforementioned values. When the mass proportion of the aluminum element in the silicon-carbon composite material is within the aforementioned range, it is beneficial to further improving the conductivity of the material and the uniformity of silicon deposition.

As an example, the mass proportion of the aluminum element in the silicon-carbon composite material may be, but is not limited to, 5 ppm to 75 ppm, 10 ppm to 70 ppm, 10 ppm to 40 ppm, 15 ppm to 65 ppm, 20 ppm to 60 ppm, 25 ppm to 55 ppm, 30 ppm to 50 ppm, 35 ppm to 45 ppm, 10 ppm to 35 ppm, 15 ppm to 30 ppm, or 20 ppm to 30 ppm, or the like.

In some embodiments, the silicon-carbon composite material further contains the potassium element, and the mass proportion of potassium element in the silicon-carbon composite material is 5 ppm to 80 ppm, for example, 5 ppm, 7 ppm, 10 ppm, 13 ppm, 15 ppm, 17 ppm, 20 ppm, 23 ppm, 25 ppm, 27 ppm, 30 ppm, 33 ppm, 35 ppm, 37 ppm, 40 ppm, 43 ppm, 45 ppm, 47 ppm, 50 ppm, 53 ppm, 55 ppm, 57 ppm, 60 ppm, 63 ppm, 65 ppm, 67 ppm, 70 ppm, 73 ppm, 75 ppm, 77 ppm, 80 ppm, or a range between any two aforementioned values. When the mass proportion of the potassium element in the silicon-carbon composite material is within the aforementioned range, it is beneficial to further improving the conductivity of the material and the uniformity of silicon deposition.

As an example, the mass proportion of the potassium element in the silicon-carbon composite material may be, but is not limited to, 5 ppm to 75 ppm, 10 ppm to 70 ppm, 15 ppm to 65 ppm, 20 ppm to 60 ppm, 25 ppm to 55 ppm, 30 ppm to 50 ppm, 35 ppm to 45 ppm, 10 ppm to 35 ppm, 15 ppm to 40 ppm, or 20 ppm to 35 ppm, or the like.

For the mass proportions of various elements (for example, the silicon element, the phosphorus element, the aluminum element, or the potassium element) mentioned in the present disclosure in the silicon-carbon composite material, the silicon-carbon composite material may be digested with reference to EPA-3052-1996 *Microwave Acid Digestion Method for Silicate*, and then the content of the target element may be measured by an inductively coupled plasma optical emission spectrometer (ICP-OES) according to EPA 6010D-2014 *Inductively Coupled Plasma Atomic Emission Spectrometry*. For example, a ICAP-7000 type inductively coupled plasma optical emission spectrometer of Thermo Fisher Scientific.

As an example, the mass proportions of the phosphorus element, the aluminum element, or the potassium element mentioned above in the silicon-carbon composite material may be measured by using the following method: 0.5 g of a silicon-carbon composite material sample is subjected to microwave digestion with 10 mL of nitric acid and 10 mL of hydrofluoric acid, and after the digestion, the sample is placed in a 50 mL volumetric flask to fix the volume, and then the content of the target element is measured by the ICAP-7000 ICP-OES.

In some embodiments, the grain size of the silicon-based material is ≤8 nm, for example, may be, but is not limited to, 0.01 nm, 0.05 nm, 0.1 nm, 0.5 nm, 1 nm, 1.5 nm, 2 nm, 2.5 nm, 3 nm, 3.5 nm, 4 nm, 4.5 nm, 5 nm, 5.5 nm, 6 nm, 6.5 nm, 7 nm, 7.5 nm, 8 nm, or a range between any two aforementioned values. When the grain size of the silicon-based material is within the aforementioned range, collapse of the structure of the silicon-carbon composite material due to expansion of the silicon-based material during the charge and discharge cycle can be prevented. Optionally, the grain size of the silicon-based material is ≤5 nm. More optionally, the grain size of the silicon-based material is 1 nm to 4 nm.

As an example, the grain size of the silicon-based material mentioned above may be calculated by using an X-ray diffraction pattern or characterized by a transmission electron microscope to obtain the grain size of the silicon-based material.

In some embodiments, the silicon-based material may include one or more of elemental silicon, a silicon oxide compound, a silicon-carbon compound, and a silicon alloy.

In some embodiments, a shape of the silicon-based material comprises one or more of a spherical shape, a spheroidal shape, a sheet shape, and a linear shape.

In some embodiments, an average pore diameter of the pore structure of the carbon matrix is 0.5 nm to 8 nm, for example, may be, but not limited to, 2 nm, 2.5 nm, 3 nm, 3.5 nm, 4 nm, 4.5 nm, 5 nm, 5.5 nm, 6 nm, 6.5 nm, 7 nm, 7.5 nm, 8 nm, or a range between any two aforementioned values. When the average pore diameter of the pore structure of the carbon matrix is within the aforementioned range, the silicon-based material deposited in the pore structure can have a relatively uniform size, thereby reducing the probability of depositing a large-size silicon-based material.

In some optional embodiments, the average pore diameter of the pore structure of the carbon matrix is 0.5 nm to 5 nm.

In some embodiments, the pore structure includes micropores, and an average pore diameter d1 of the micropores satisfies 0.5 nm≤d1<2 nm.

In some embodiments, the pore structure includes mesopores, and an average pore diameter d2 of the mesopores satisfies 2 nm≤d2≤8 nm.

In some embodiments, the pore structure includes micropores, and the proportion of quantity of the micropores in the pore structure is 60% to 90%, for example, 60%, 63%, 65%, 68%, 70%, 72%, 75%, 78%, 80%, 83%, 85%, 88%, 90%, or a range between any two aforementioned values. When the proportion of quantity of the micropores in the pore structure is within the aforementioned range, the probability of depositing a large-size silicon-based material may be further reduced. Optionally, the proportion of quantity of the micropores in the pore structure is 70% to 80%.

As an example, the average pore diameter of the pore structure of the carbon matrix mentioned above may be measured by a nitrogen adsorption and desorption method.

In some embodiments, a specific surface area of the carbon matrix is 500 m²/g to 2,000 m²/g, for example, may be, but is not limited to, 500 m²/g, 600 m²/g, 700 m²/g, 800 m²/g, 900 m²/g, 1,000 m²/g, 1,100 m²/g, 1,200 m²/g, 1,300 m²/g, 1,400 m²/g, 1,500 m²/g, 1,600 m²/g, 1,700 m²/g, 1,800 m²/g, 1,900 m²/g, 2,000 m²/g, or a range between any two aforementioned values. When the specific surface area of the carbon matrix is within the aforementioned range, it is beneficial to deposit the silicon-based material in the pore structure of the carbon matrix, and meanwhile, the deposition amount of the silicon-based material may be prevented from being too large, thereby avoiding the collapse of the carbon matrix caused by excessive volume expansion of the silicon-based material during the charge and discharge cycles.

In some optional embodiments, the specific surface area of the carbon matrix is 1,000 m²/g to 1,800 m²/g.

As an example, the specific surface area of the porous carbon matrix mentioned above may be measured by the nitrogen adsorption and desorption method.

In some embodiments, the volume-distributed particle size Dv50 of the silicon-carbon composite material is 3 µm to 15 µm, and when the volume-distributed particle size Dv50 of the silicon-carbon composite material is within the aforementioned range, it is beneficial to uniform deposition of the silicon-based material in the carbon matrix, and the secondary battery has superior kinetics. As an example, the volume-distributed particle size Dv50 of the silicon-carbon composite material mentioned above may be, but is not limited to, 3 µm, 5 µm, 7 µm, 10 µm, 12 µm, 15 µm, or a range between any two aforementioned values.

In some optional embodiments, the v volume-distributed particle size Dv50 of silicon-carbon composite material is 5 µm to 12 µm.

In some embodiments, the volume-distributed particle size Dv90 of the silicon-carbon composite material is ≤35 µm, for example, may be, but is not limited to, 5 µm, 10 µm, 15 µm, 20 µm, 25 µm, 30 µm, 35 µm, or a range between any two aforementioned values. When the volume-distributed particle size Dv90 of the silicon-carbon composite material is within the aforementioned range, the probability that the negative electrode sheet pierces the separator may be reduced.

In some optional embodiments, the v volume-distributed particle size Dv90 of silicon-carbon composite material is 15 µm to 25 µm.

In some embodiments, the particle size distribution of the silicon-carbon composite material satisfies 1≤(Dv90-Dv10)/Dv50≤3. When the particle size distribution of the silicon-carbon composite material satisfies the aforementioned relational expression, it is beneficial to improving the compacted density of the negative electrode sheet and the cycle performance of the material. As an example, (Dv90-Dv10)/Dv50 may be, but is not limited to, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, or a range between any two aforementioned values.

In some optional embodiments, the particle size distribution Dv90 of the silicon-carbon composite material satisfies 1≤(Dv90-Dv10)/Dv50≤2.

Dv10, Dv50, Dv90 of a material are well known in the art and can be tested using methods known in the art. It may be determined, for example, with reference to the standard GB/T 19077-2016, using a laser particle size analyzer (e.g. Malvern Master Size 3000).

The physical definitions of Dv10, Dv50 and Dv90 are as follows:
Dv10: a corresponding particle size when a cumulative volume distribution percentage of the material reaches 10%;
Dv50: a corresponding particle size when a cumulative volume distribution percentage of the material reaches 50%; and
Dv90: a corresponding particle size when a cumulative volume distribution percentage of the material reaches 90%.

In some possible embodiments, the specific surface area of the silicon-carbon composite material is 1 m²/g to 10 m²/g. When the specific surface area of the silicon-carbon composite material is within the aforementioned range, it is beneficial to improving the first efficiency of the secondary battery. As an example, the specific surface area of the silicon-carbon composite material may be, but is not limited to, 1 m²/g, 2 m²/g, 3 m²/g, 4 m²/g, 5 m²/g, 6 m²/g, 7 m²/g, 8 m²/g, 9 m²/g, or 10 m²/g, or a range between any two aforementioned values.

In some optional embodiments, the specific surface area of the silicon-carbon composite material is 2 m²/g to 6 m²/g.

As an example, the pore diameter of the pore structure of the carbon matrix and the specific surface area of the silicon-carbon composite material mentioned above having the meaning known in the art may be measured using methods known in the art. For example, with reference to GB/T 19587 2017, the specific surface area may be obtained by using a specific surface area testing method with nitrogen adsorption and using the BET (Brunauer Emmett Teller) method for calculation, wherein the specific surface area testing method with nitrogen adsorption may be performed by a Tri-Star 3020 Specific Surface Area Pore Size Analysis Tester from Micromeritics, USA.

In some embodiments, a tap density of the silicon-carbon composite material is 0.8 g/cm³ to 1.2 g/cm³. As an example, the tap density of the silicon-carbon composite material may be, but is not limited to, 0.8 g/cm³, 0.83 g/cm³, 0.85 g/cm³, 0.87 g/cm³, 0.9 g/cm³, 0.92 g/cm³, 0.95 g/cm³, 0.98 g/cm³, 1 g/cm³, 1.02 g/cm³, 1.05 g/cm³, 1.08 g/cm³, 1.1 g/cm³, 1.12 g/cm³, 1.15 g/cm³, 1.18 g/cm³, 1.2g/cm³ or a range between any two aforementioned values.

In some optional embodiments, the tap density of the silicon-carbon composite material is 0.85 g/cm³ to 1.0 g/cm^{3.}

It should be noted that the tap density of the aforementioned silicon-carbon composite material is the mass in unit volume of the tapped carbon-silicon composite material powder in a container under a specified condition.

The tap density of the negative electrode active material has the meaning known in the art, and may be tested using methods known in the art. For example, the top density may be measured using a powder tap density tester with reference to GB/T 5162-2006. For example, a FZS4-4B tap density meter of Beijing Steel Research Institute is used, and the test parameters are as follows: vibration frequency: 250±15 times/min, amplitude: 3±0.2 mm, number of vibrations: 5,000 times, graduated cylinder: 25 mL.

In some embodiments, powder resistivity of the silicon-carbon composite material is ≤5 Ω · cm at 16 MPa. When the powder resistivity of the silicon-carbon composite material at 16 MPa is within the aforementioned range, the silicon-carbon composite material has excellent electrical conductivity, which in turn helps to improve the dynamic performance of the battery. Optionally, the powder resistivity of the silicon-carbon composite material at 16 MPa is ≤2 Ω · m. More optionally, the powder resistivity of the silicon-carbon composite material at 16 MPa is ≤1 Ω · m.

As an example, the powder resistivity of the silicon-carbon composite material mentioned above at 16 MPa may be measured by using the following method: placing an appropriate amount of sample to be tested in a feeding cup of a resistivity tester, applying a pressure, manually collecting data, and recording test results of the powder resistivity at different pressure points, where the test pressure is 16 MPa.

In some embodiments, the mass proportion of the silicon element in the silicon-carbon composite material is 20% to 60%. When the mass proportion of the silicon element in the silicon-carbon composite material is within the aforementioned range, the capacity, first efficiency, and cycle performance of the silicon-carbon composite material may be improved at the same time. As an example, the mass proportion of the silicon element in the silicon-carbon composite material may be, but is not limited to, 20%, 25%, 30%, 35%, 40%, 45%, 50%, 55%, 60%, or a range between any two aforementioned values.

In some optional embodiments, the mass proportion of the silicon element in the silicon-carbon composite material is 30% to 50%. In some embodiments, at least a part of a surface of the silicon-carbon composite material is provided with a coating layer.

Optionally, the coating layer is a carbon coating layer; by disposing the carbon coating layer, the conductivity of the surface of the material may be improved, which is beneficial to exerting the capacity and improving the cycle performance of the silicon-carbon composite material, and the carbon coating layer may reduce the contact between the silicon-based material and the electrolyte solution, reduce the side reaction of the battery, and improve the stability and safety of the material.

It should be noted that the carbon coating layer may be a continuous and complete coating layer or an incomplete coating layer, where "complete" means that the substance located inside the carbon coating layer is completely coated by the carbon coating layer, and the carbon coating layer completely isolates the substance inside the carbon coating layer from the outside of the carbon coating layer. "Incomplete" means that the substance located inside the carbon coating layer is not completely coated by the carbon coating layer, and the substance inside the carbon coating layer may be at least partially in contact with the outside of the carbon coating layer. Preferably, the carbon coating layer is a continuous and complete coating layer.

In some optional embodiments, a material of the carbon coating layer includes amorphous carbon, and the amorphous carbon may serve as a fast charging ion loop, improving the dynamic performance of the silicon-carbon composite material, and reducing the contact between the silicon-based material and the electrolyte solution.

In some optional embodiments, a thickness of the carbon coating layer is 50 nm to 200 nm, for example, may be, but is not limited to, 50 nm, 60 nm, 70 nm, 80 nm, 90 nm, 100 nm, 110 nm, 120 nm, 130 nm, 140 nm, 150 nm, 160 nm, 170 nm, 180 nm, 190 nm, 200 nm, or a range between any two aforementioned values. When the thickness of the carbon coating layer is greater than the aforementioned range, the capacity of the secondary battery may be reduced, and when the thickness of the carbon coating layer is less than the aforementioned range, the silicon-based material may be exposed, which affects the processability.

As an example, the thickness of the carbon coating layer mentioned above may be measured by a transmission electron microscope.

In some embodiments, the phosphorus element is distributed in the carbon matrix.

In some embodiments, at least one of the aluminum element and the potassium element is distributed in the carbon matrix.

A second aspect of the present disclosure provides a method for preparing a silicon-carbon composite material, including the following steps:
mixing a carbon material precursor with a phosphorus-containing compound and sintering the mixture to prepare a carbon matrix having a pore structure; and
depositing the silicon-based material in a pore structure of the carbon matrix to prepare the silicon-carbon composite material.

It should be noted that the phosphorus-containing compound may be used as either a pore-forming additive or a phosphorus element-doped raw material.

The method for preparing the silicon-carbon composite material provided by the present disclosure has a simple process, may realize one step pore formation and obtain pores with a relatively uniform size, and the phosphorus element can be doped into the framework of the carbon matrix.

In some embodiments, mixing the carbon material precursor with the phosphorus-containing compound includes mixing the carbon material precursor with a solvent containing the phosphorus-containing compound. Optionally, the solvent containing the phosphorus-containing compound is water.

In some optional embodiments, the carbon material precursor is mixed with the solution containing the phosphorus-containing compound and allowed to stand; and the solution containing the phosphorus-containing compound infiltrates into the carbon material precursor by standing.

In some optional embodiments, standing time is 12 h to 24 h, for example, but is not limited to, 12 h, 13 h, 14 h, 15 h, 16 h, 17 h, 18 h, 19 h, 20 h, 21h, 22 h, 23 h, 24 h, or a range between any two aforementioned time.

In some embodiments, the phosphorus-containing compound includes one or more of phosphoric acid, potassium phosphate, sodium phosphate, calcium dihydrogen phosphate, and potassium dihydrogen phosphate.

As a possible embodiment, the carbon material precursor includes one or more of biomass hard carbon and a resin-based carbon material.

Optionally, the biomass hard carbon includes one or more of coconut shells, lignin, bamboo powder, and starch.

It should be noted that the bamboo powder is powder prepared from bamboo as a raw material.

Optionally, the resin-based carbon material includes one or more of phenolic resin, epoxy resin, urea resin, and furan resin.

In some embodiments, the carbon material precursor contains at least one of the aluminum element or the potassium element.

In some optional embodiments, the mass proportion of the aluminum element in the carbon material precursor is 5 ppm to 80 ppm, for example, 5 ppm, 10 ppm, 15 ppm, 20 ppm, 25 ppm, 30 ppm, 35 ppm, 40 ppm, 45 ppm, 50 ppm, 55 ppm, 60 ppm, 65 ppm, 70 ppm, 75 ppm, 80 ppm, or a range between any two aforementioned values. As an example, the mass proportion of the aluminum element in the carbon material precursor may be, but is not limited to, 5 ppm to 75 ppm, 10 ppm to 70 ppm, 15 ppm to 65 ppm, 20 ppm to 60 ppm, 25 ppm to 55 ppm, 30 ppm to 50 ppm, 35 ppm to 45 ppm, 10 ppm to 35 ppm, 15 ppm to 30ppm, or 20 ppm to 30 ppm.

In some optional embodiments, the mass proportion of the aluminum element in the carbon material precursor is 6 ppm to 60 ppm.

In some optional embodiments, the carbon material precursor further contains the potassium element, and the mass proportion of the potassium element in the carbon material precursor is 5 ppm to 80 ppm, for example, 5 ppm, 7 ppm, 10 ppm, 13 ppm, 15 ppm, 17 ppm, 20 ppm, 23 ppm, 25 ppm, 27 ppm, 30 ppm, 33 ppm, 35 ppm, 37 ppm, 40 ppm, 43 ppm, 45 ppm, 47 ppm, 50 ppm, 53 ppm, 55 ppm, 57 ppm, 60 ppm, 63 ppm, 65 ppm, 67 ppm, 70 ppm, 73 ppm, 75 ppm, 77 ppm, 80 ppm, or a range between any two aforementioned values.

As an example, the mass proportion of the potassium element in the carbon material precursor may be, but is not limited to, 5 ppm to 75 ppm, 10 ppm to 70 ppm, 15 ppm to 65 ppm, 20 ppm to 60 ppm, 25 ppm to 55 ppm, 30 ppm to 50 ppm, 35 ppm to 45 ppm, 10 ppm to 35 ppm, 15 ppm to 40 ppm, or 20 ppm to 35 ppm, or the like.

In some optional embodiments, the mass proportion of the potassium element in the carbon material precursor is 10 ppm to 70 ppm.

In some embodiments, the mass proportion of the carbon material precursor to the phosphorus-containing compound is 100: (3-15), for example, may be, but is not limited to 100: 3, 100: 4, 100: 5, 100: 6, 100: 7, 100: 8, 100: 9, 100: 10, 100: 11, 100: 12, 100: 13, 100: 14, 100: 15, or a range between any two aforementioned values. When the mass ratio of the carbon material precursor to the phosphorus-containing compound is within the aforementioned range, the P element may be within the desired range.

In some optional embodiments, the mass ratio of the carbon material precursor to the phosphoric acid substance is 100: (4-10).

In some embodiments, a temperature for the sintering is 600°C to 1000°C, for example, may be, but is not limited to, 600°C, 650°C, 700°C, 750°C, 800°C, 850°C, 900°C, 950°C, 1000°C, or a range between any two aforementioned values. Optionally, the temperature for the sintering is 600°C to 900°C.

In some embodiments, the time for the sintering is 1 h to 12 h, for example, 1 h, 2 h, 3 h, 4 h, 5 h, 6 h, 7 h, 8 h, 9 h, 10 h, 11 h, 12 h, or a range between any two aforementioned values. Optionally, the time for sintering is 4 h to 8 h.

When the temperature and time for the sintering are controlled within the aforementioned ranges respectively, the treatment time is too long, which may cause the doping of P element to exceed the requirements.

In some embodiments, an atmosphere of the sintering includes one or more of an inert gas and nitrogen. Optionally, the atmosphere of the sintering includes one or more of argon and nitrogen.

In some possible embodiments, the step of depositing the silicon-based material in the pore structure of the carbon matrix includes: placing the carbon matrix in a mixed gas containing a silicon source and a first protective gas, and performing a first vapor deposition to deposit the silicon-based material in the pore structure of the carbon matrix. The silicon-based material is deposited in the pore structure by vapor deposition, which may increase the proportion of the silicon-based material embedded in the pore structure.

In some optional embodiments, the temperature of the first vapor deposition may be 400°C to 800°C, for example, may be, but is not limited to, 400°C, 430°C, 450°C, 480°C, 500°C, 530°C, 550°C, 570°C, 600°C, 630°C, 650°C, 680°C, 700°C, 730°C, 750°C, 770°C, 800°C, or a range between any two aforementioned values. When the temperature of the first vapor deposition is within the aforementioned range, it is beneficial to controlling the grain size of the silicon-based material to be within a suitable range. It is preferably 500°C to 700°C, and more preferably 500°C to 600°C.

In some optional embodiments, the time for the first vapor deposition is 1 h to 12, for example, may be, but is not limited to, 1 h, 2 h, 3 h, 4 h, 5 h, 6 h, 7 h, 8 h, 9 h, 10 h, 11 h, 12 h, or a range between any two aforementioned values. Optionally, it is 4 h to 8 h. The time for the first vapor deposition is within the aforementioned range, which is beneficial to obtaining a silicon-based material with an appropriate particle size, and is beneficial to adjusting the silicon-based material to achieve an appropriate mass proportion in the silicon-carbon composite material.

In some optional embodiments, the volume proportion of the silicon source in the mixed gas is 10% to 50%.

In some optional embodiments, the volume proportion of the first protective gas in the mixed gas is 30% to 85%.

As a possible embodiment, a positive difference between a pressure of the first vapor deposition and an atmospheric pressure is 200 Pa to 600 Pa, for example, may be, but is not limited to, 200 Pa, 250 Pa, 300 Pa, 350 Pa, 400 Pa, 450 Pa, 500 Pa, 550 Pa, 600 Pa, or a range between any two aforementioned values.

It should be noted that the positive difference refers to how much the pressure of the first vapor deposition is higher than the atmospheric pressure.

In some embodiments, the silicon source includes one or more of monosilane, disilane, and trisilane.

In some embodiments, the first protective gas includes one or more of nitrogen and argon.

In some embodiments, the mixed gas further includes a first carbon source. Thus, decomposition of the silicon source may be facilitated.

In some optional embodiments, the volume proportion of the first carbon source in the mixed gas is 5% to 20%.

In some optional embodiments, the volume ratio of the silicon source to the first carbon source is (2-10): 1, for example, may be, but is not limited to 2: 1, 3: 1, 4: 1, 5: 1, 6: 1, 7: 1, 8: 1, 9: 1, 10: 1, or a range between any two aforementioned values. When the volume ratio of the silicon source to the first carbon source is higher than the aforementioned range, the decomposition ratio of the carbon content is high, and the capacity improvement effect is general, and when the volume ratio of the silicon source to the first carbon source is lower than the aforementioned range, the content of the silicon-based material on the surface of the carbon matrix will increase, and slurry processing will be problematic.

As a possible embodiment, the first carbon source includes one or more of methane, ethylene, and acetylene.

As a possible embodiment, after the step of depositing the silicon-based material in the pore structure of the carbon matrix, the method further includes:

placing the carbon matrix in a mixed gas containing a second carbon source and a second protective gas, and performing second vapor deposition to form the carbon coating layer on at least a part of an outer surface of the carbon matrix. The carbon coating layer is prepared by vapor deposition, which facilitates control of the coating amount to improve the surface conductivity of the silicon-carbon composite material, helps the material capacity to be exerted, and helps maintain the stability and safety of the silicon-carbon composite material.

In some optional embodiments, the temperature for the second vapor deposition may be 500°C to 900°C, for example, may be, but is not limited to, 500°C, 530°C, 550°C, 580°C, 600°C, 630°C, 650°C, 680°C, 700°C, 730°C, 750°C, 770°C, 800°C, 830°C, 850°C, 880°C, 900°C, or a range between any two aforementioned values.

In some optional embodiments, the time for the second vapor deposition is 1 h-6 h, for example, may be, but is not limited to, 1 h, 2 h, 3 h, 4 h, 5 h, 6 h, or a range between any two aforementioned values.

In some optional embodiments, the volume proportion of the second carbon source in the mixed gas is 5% to 50%, and the sum of the volume proportion of the second carbon source and the volume proportion of the second protective gas in the mixed gas is 100%.

In some optional embodiments, the second carbon source includes one or more of methane, ethylene, and acetylene.

In some embodiments, the second protective gas may include one or more of nitrogen and argon.

It should be noted that "first carbon source", "second carbon source", "first protective gas", "second protective gas", "first vapor deposition", and "second vapor deposition" mentioned above are used for descriptive purposes only, and should not be construed as indicating or implying relative importance or number, nor as implicitly indicating the importance or quantity of technical features indicated.

In some embodiments, the method for preparing a silicon-carbon composite material includes the following steps:

mixing a carbon material precursor with a solution containing a phosphorus-containing compound and allowing the mixture to stand for 12 h to 24 h, and sintering the mixture to prepare the carbon matrix having the pore structure. The phosphorus-containing compound includes one or more of phosphoric acid, potassium phosphate, sodium phosphate, calcium dihydrogen phosphate, and potassium dihydrogen phosphate. The carbon material precursor includes one or more of biomass hard carbon and a resin-based carbon material, the biomass hard carbon includes one or more of coconut shells, lignin, bamboo powder, and starch, and the resin-based carbon material includes one or more of phenolic resin, epoxy resin, urea resin, and furan resin. The mass ratio of the carbon material precursor to the phosphorus-containing compound is 100: (3-15), optionally 100: (4-10). The carbon material precursor contains at least one of the aluminum element and the potassium element, the mass proportion of the aluminum element in the carbon material precursor is 5 ppm to 80 ppm, optionally 6 ppm to 60 ppm, and the mass proportion of the potassium element in the carbon material precursor is 5 ppm to 80 ppm, optionally 6 ppm to 60 ppm. Optionally, a temperature for the sintering is 600°C to 1000°C, optionally 600°C to 900°C. Time for the sintering is 1 h to 12 h, optionally 4 h to 8 h. An atmosphere of the sintering includes one or more of an inert gas and nitrogen.

The carbon matrix is placed in a mixed gas containing a silicon source, a first carbon source, and a first protective gas, and first vapor deposition is performed to deposit the silicon-based material in the pore structure of the carbon matrix. The temperature of the first vapor deposition is 400°C to 800°C, optionally 500°C to 700°C, and more optionally 500°C to 600°C. The time for the first vapor deposition is 1 h to 12 h, optionally 4 h to 8 h. The volume proportion of the silicon source in the mixed gas is 10% to 50%, the volume proportion of the first carbon source in the mixed gas is 5% to 20%, the volume proportion of the first protective gas in the mixed gas is 30% to 85%, the sum of the volume proportions of the silicon source, the first carbon source, and the first protective gas in the mixed gas is 100%, and the volume ratio of the silicon source to the first carbon source is (2-10): 1. The positive difference between the pressure of the first vapor deposition and the atmospheric pressure is 200 Pa to 600 Pa. The silicon source gas includes one or more of monosilane, disilane, and trisilane. The first carbon source includes one or more of methane, ethylene, and acetylene. The first protective gas includes one or more of nitrogen and argon.

The carbon matrix where the silicon-based material is deposited is placed in a mixed gas containing a second carbon source and a second protective gas, and second vapor deposition is performed to form the carbon coating layer on at least a part of an outer surface of the carbon matrix. The temperature for the second vapor deposition is 500°C to 900°C. The time for the second vapor deposition is 1 h to 6 h. The volume proportion of the second carbon source in the mixed gas is 5% to 50%, and the sum of the volume proportion of the second carbon source and the volume proportion of the second protective gas in the mixed gas is 100%. The second carbon source includes one or more of methane, ethylene, and acetylene. The second protective gas includes one or more of nitrogen and argon.

A third aspect of the present disclosure provides a negative electrode sheet, including a negative electrode current collector and a negative electrode active material layer located on at least one side of the negative electrode current collector, where the negative electrode active material layer includes the silicon-carbon composite material in the first aspect or the silicon-carbon composite material prepared by using the method in the second aspect.

The negative electrode sheet of the present disclosure includes the silicon-carbon composite material provided by the present disclosure, and the volume change rate thereof during charging and discharging is significantly reduced.

As a non-limiting example, the negative electrode current collector has two surfaces opposite in its own thickness direction, and the negative electrode active material layer is disposed on either one or both of the two opposite surfaces of the negative electrode current collector.

In some embodiments, the negative electrode current collector may be metal foil or a composite current collector. For example, a copper foil may be used as the metal foil. The composite current collector may include a polymer material base layer and a metal layer formed on at least one surface of a polymer material substrate. The composite current collector may be obtained by forming a metal material on a polymer material substrate. In the negative electrode current collector, a non-limiting example of the metal material may include one or more of copper, a copper alloy, nickel, a nickel alloy, titanium, a titanium alloy, silver, a silver alloy, or the like. In the negative electrode current collector, a non-limiting example of the polymer material substrate may include one or more of substrates such as polypropylene (PP), polyethylene terephthalate (PET), polybutylene terephthalate (PBT), polystyrene (PS), and polyethylene (PE).

In some embodiments, the negative electrode active material may be a negative electrode active material for a battery known in the art. As a non-limiting example, the negative electrode active material may include one or more of the following materials: synthetic graphite, natural graphite, soft carbon, hard carbon, a silicon-based material, a tin-based material, lithium titanate, and the like. The silicon-based material may include one or more of elemental silicon, a silicon oxide compound, a silicon-carbon compound, and a silicon alloy. The tin-based material may include one or more of elemental tin, a tin-oxygen compound, and a tin alloy. However, the present disclosure is not limited to these materials, and another conventional material that can be used as a negative electrode active material of a battery may also be used. These negative pole active materials may be used alone or in combination of two or more thereof.

In some embodiments, the negative electrode active material layer further optionally includes a binder. The binder may include one or more of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer further optionally includes a conductive agent. The conductive agent may include at least one or more of superconducting carbon, acetylene black, carbon black, Ketjen black, carbon dots, carbon nanotubes, graphene, and carbon nanofibers.

In some embodiments, the negative electrode active material layer further optionally includes another auxiliary agent, for example, a thickening agent (e.g., sodium carboxymethyl cellulose (CMC-Na)).

In some embodiments, the negative electrode sheet may be prepared in the following manner: dispersing the foregoing components, for example, the negative electrode active material, the conductive agent, the binder, and any other components, for preparing the negative electrode sheet into a solvent (a non-limiting example of the solvent, e.g., deionized water) to form a negative electrode slurry; and coating the negative electrode slurry on at least one side surface of the negative electrode current collector, and performing procedures such as drying and cold pressing, to obtain the negative electrode sheet. The surface of the negative electrode current collector on which the negative electrode slurry is coated may be a single surface of the negative electrode current collector or both surfaces of the negative electrode current collector. The solid content of the negative electrode slurry may be 40 wt% to 60 wt%. The viscosity of the negative electrode slurry at room temperature may be adjusted to 2000 mPa·s to 10000 mPa·s. When the negative electrode slurry is applied, the coating density per unit area on a dry weight basis (excluding the solvent) may be 75 g/m² to -220 g/m². The compacted density of the negative electrode sheet may be 1.3 g/cm³ to 1.8 g/cm³.

A fourth aspect of the present disclosure provides a secondary battery, including the negative electrode sheet in the third aspect of the present disclosure.

The secondary battery of the present disclosure includes the silicon-carbon composite material provided by the present disclosure, and has excellent cycle performance.

In addition, the secondary battery and the electrical device in the present disclosure are described appropriately below with reference to the accompanying drawings.

Generally, the secondary battery includes a positive electrode sheet, a negative electrode sheet, an electrolyte, and a separator. During charge and discharge of the battery, active ions are intercalated and deintercalated back and forth between the positive electrode sheet and the negative electrode sheet. The electrolyte functions to conduct ions between the positive electrode sheet and the negative electrode sheet. The separator is disposed between the positive electrode sheet and the negative electrode sheet, to mainly prevent positive and negative electrodes from being shortcircuited and allow ions to pass through.

### Positive electrode sheet

The positive electrode sheet includes a positive electrode current collector and a positive electrode active material layer disposed on at least one surface of the positive electrode current collector, and the positive electrode active material layer includes a positive electrode active material.

As a non-limiting example, the positive electrode current collector has two surfaces opposite to each other in its own thickness direction, and a positive electrode active material layer is disposed on either one or both of the two opposite surfaces of the positive electrode current collector.

In some of embodiments, the positive electrode current collector may be metal foil or a composite current collector. For example, an aluminum foil can be used as the metal foil. The composite current collector may include a polymer material base layer and a metal layer formed on at least one surface of the polymer material base layer. The composite current collector may be obtained by forming a metal material on a polymer material substrate. In the positive electrode current collector, a non-limiting example of the metal material may include one or more of aluminum, an aluminum alloy, nickel, a nickel alloy, titanium, a titanium alloy, silver, a silver alloy, or the like. In the positive electrode current collector, a non-limiting example of the polymer material substrate may include one or more of substrates such as polypropylene (PP), polyethylene terephthalate (PET), polybutylene terephthalate (PBT), polystyrene (PS), and polyethylene (PE).

The positive electrode active material may be a positive electrode active material for a battery well-known in the art.

When the secondary battery of the present disclosure is a lithium ion battery, the positive electrode active material for the lithium ion battery may include, but is not limited to, at least one of lithium transition metal oxide and lithium-containing phosphate. Examples of the lithium transition metal oxide may include, but are not limited to, one or more of a lithium cobalt oxide, a lithium nickel oxide, a lithium manganese oxide, a lithium nickel cobalt oxide, a lithium manganese cobalt oxide, a lithium nickel manganese oxide, a lithium nickel cobalt manganese oxide, a lithium nickel cobalt aluminum oxide, and respective modified compounds thereof. Examples of the lithium-containing phosphate may include, but are not limited to, one or more of lithium iron phosphate, a composite material of lithium iron phosphate and carbon, lithium manganese phosphate, a composite material of lithium manganese phosphate and carbon, lithium ferric manganese phosphate, a composite material of lithium ferric manganese phosphate and carbon, and respective modified compounds thereof.

In some embodiments, in order to further improve the energy density of the secondary battery, the positive electrode active material for a lithium ion battery may include LiₐNi_{b}Co_{c}M_{d}OₑA_{f}, where 0.5 ≤a≤1.2, 0.5, 0≤b<1, 0<c<1, 0<d<1, 1≤e≤2, 0≤f≤1, M includes one or more of Mn, Al, Zr, Zn, Cu, Cr, Mg, Fe, V, Ti, and B, and A includes one or more of N, F, S and Cl.

As an example, the positive electrode active material for a lithium ion battery may include one or more of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.80}Co_{0.15}Al_{0.05}O₂, LiFePO₄, and LiMnPO₄.

The modified compound of each of the aforementioned positive electrode active materials may be a compound of the positive electrode active material subjected to doping modification and/or surface coating modification.

In some embodiments, the positive electrode active material layer further optionally includes a binder. As a non-limiting example, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode active material layer further optionally includes a conductive agent. As a non-limiting example, the conductive agent may include one or more of superconducting carbon, acetylene black, carbon black, Ketjen black, carbon dots, carbon nanotubes, graphene, and carbon nanofibers.

In some embodiments, the positive electrode sheet may be prepared in the following manner: dispersing the foregoing components, for example, the positive electrode active material, the conductive agent, the binder, and any other components, for preparing the positive electrode sheet into a solvent to form a positive electrode slurry; and coating the positive electrode slurry on at least one side surface of the positive electrode current collector, and performing procedures such as drying and cold pressing, to obtain the positive electrode sheet. The type of solvent may be selected from any one in the aforementioned embodiments, for example, N-methylpyrrolidone (NMP). The surface of the positive electrode current collector to which the positive electrode slurry is applied may be a single surface of the positive electrode current collector or both surfaces of the positive electrode current collector. The surface of the positive electrode current collector to which the positive electrode slurry is applied may be a single surface of the positive electrode current collector or both surfaces of the positive electrode current collector.

### Electrolyte

The electrolyte functions to conduct ions between the positive electrode sheet and the negative electrode sheet. The type of the electrolyte is not particularly limited in the present disclosure, and may be selected according to a requirement. For example, the electrolyte may be liquid, gelled or all solid.

In some of embodiments, the electrolyte is an electrolyte solution. The electrolyte solution includes an electrolyte salt and a solvent.

In some embodiments, the electrolyte salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis-trifluoromethanesulfonimide (LiTFSI), lithium trifluoromethanesulfonate (LiTFS), lithium difluorophosphate (LiPO₂F₂), lithium diofluoroxalate borate (LiDFOB), lithium dioxalate borate (LiBOB), lithium difluorodioxalate phosphate (LiDFOP), and lithium tetrafluorooxalate phosphate (LiTFOP).

In some embodiments, the solvent may include one or more of ethylene carbonate (EC, 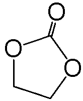 ), propylene carbonate (PC, 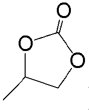 ), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate ( 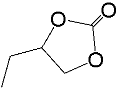 ), fluoroethylene carbonate (FEC), methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and ethyl sulfone.

In some embodiments, the electrolyte solution further optionally includes an additive. For example, the additive may include a negative pole film-forming additive or a positive pole film-forming additive, and may further include an additive capable of improving specific performance of a battery, for example, an additive for improving overcharge performance of a battery, or an additive for improving high-temperature or low-temperature performance of a battery.

In some implementations, the additive in the electrolyte solution may include, but is not limited to, one or more of fluoroethylene carbonate (FEC), difluoroethylene carbonate (DFEC), trifluoromethyl ethylene carbonate (TFPC), or the like.

### Separator

In some embodiments, the secondary battery further includes a separator. The type of the separator is not particularly limited in the present disclosure, and any well-known porous separator with good chemical stability and mechanical stability may be used.

In some embodiments, a material of the separator may include one or more of glass fiber, non-woven fabric, polyethylene, polypropylene, and polyvinylidene fluoride. The separator may be a single-layer thin film or may be a multi-layer composite thin film, which is not particularly limited. When the separator is a multi-layer composite thin film, materials of each layer may be the same or different, which is not particularly limited.

In some embodiments, the positive electrode sheet, the negative electrode sheet, and the separator may be manufactured into an electrode assembly through a winding process or a lamination process.

In some embodiments, the secondary battery may include an outer package. The outer package may be used to package the foregoing electrode assembly and electrolyte.

In some embodiments, the outer package of the secondary battery may be a hard shell, for example, a hard plastic shell, an aluminum shell, or a steel shell. The outer package of the secondary battery may also be a pouch, such as a bag-type pouch. A material of the pouch may be plastic, and further, non-limiting examples of the plastic may include one or more of polypropylene, polybutylene terephthalate, and polybutylene succinate.

The secondary battery includes at least one battery cell. The secondary battery may include one or a plurality of battery cells.

In the present disclosure, unless otherwise specified, a "battery cell" refers to a basic unit capable of implementing mutual conversion between chemical energy and electrical energy, and further, generally includes at least a positive electrode sheet, a negative electrode sheet, and an electrolyte. During charge and discharge of the battery, active ions are intercalated and deintercalated back and forth between the positive electrode sheet and the negative electrode sheet. The electrolyte functions to conduct active ions between the positive electrode sheet and the negative electrode sheet.

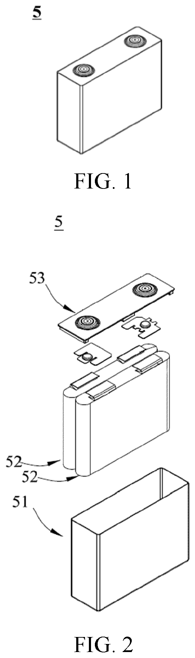

The shape of the battery cell is not particularly limited in the present disclosure, and may be a cylindrical shape, a square shape, or any other shape. For example, FIG. 1 shows a battery cell 5 with a square structure as an example.

In some embodiments, referring to FIG. 2, the outer package may include a housing 51 and a cover plate 53. The housing 51 may include a bottom plate and side plates connected to the bottom plate, and the bottom plate and the side plates define an accommodating chamber. The housing 51 is provided with an opening communicating with the accommodating chamber, and the cover plate 53 can cover the opening to close the accommodating chamber. The positive electrode sheet, the negative electrode sheet, and the separator may be formed into an electrode assembly 52 through a winding process or a lamination process. The electrode assembly 52 is packaged in the accommodating chamber. The electrolyte solution is impregnated into the electrode assembly 52. There may be one or a plurality of electrode assemblies 52 included in the battery cell 5, and those skilled in the art may perform selection based on actual requirements.

The secondary battery may be a battery module 4 or a battery pack 1.

The battery module includes at least one battery cell. There may be one or a plurality of battery cells included in the battery module, and those skilled in the art may select a proper quantity based on an application and the capacity of the battery module.

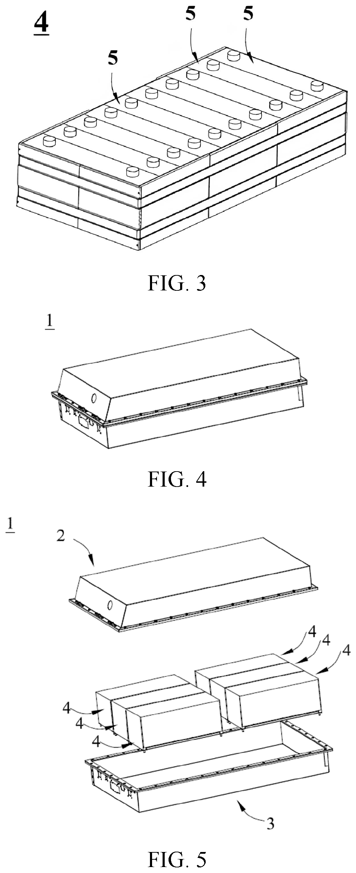

FIG. 3 shows a battery module 4 as an example. Referring to FIG. 3, in the battery module 4, a plurality of battery cells 5 may be arranged sequentially in a longitudinal direction of the battery module 4. Certainly, the battery cells may alternatively be arranged in any other manner. Further, the plurality of battery cells 5 may be fastened by using fasteners.

Optionally, the battery module 4 may further include a casing having an accommodating space in which the plurality of battery cells 5 are accommodated.

In some embodiments, the foregoing battery modules may be further assembled into a battery pack, and there may be one or a plurality of battery modules included in the battery pack, and those skilled in the art may select a proper quantity according to an application and the capacity of the battery pack.

FIG. 4 and FIG. 5 show a battery pack 1 as an example. Referring to FIG. 4 and FIG. 5, a battery case and a plurality of battery modules 4 disposed in the battery case may be included in the battery pack 1. The battery case includes an upper box body 2 and a lower box body 3, the upper box body 2 being capable of covering the lower box body 3 and forming a closed space for accommodating the battery modules 4. The plurality of battery modules 4 may be arranged in any manner in the battery case.

In addition, the present disclosure further provides an electrical device, including the secondary battery provided in the present disclosure. The secondary battery may be used as a power supply for the electrical device, or as an energy storage unit for the electrical device. The electrical device may include, but is not limited thereto, a mobile device, an electric vehicle, an electric train, a ship, a satellite, an energy storage system, and the like. For example, the mobile device may be a mobile phone or a notebook computer. For example, the electric vehicle may be, but is not limited thereto, a full electric vehicle, a hybrid electric vehicle, a plug-in hybrid electric vehicle, an electric bicycle, an electric scooter, an electric golf cart, or an electric truck.

As an electrical device, the secondary battery may be selected according to use requirements of the electrical device.

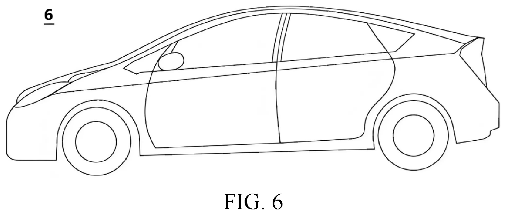

FIG. 6 shows an electrical device 6 as an example. The electrical device is a pure electric vehicle, a hybrid electric vehicle, a plug-in hybrid electric vehicle, or the like. In order to meet the demand for high power and high energy density of the secondary battery by the electrical device, a battery pack or a battery module may be used.

In another example, the device may be a cell phone, a tablet computer, a notebook computer, or the like. This electrical device is generally required to be thin and lightweight, and may use a secondary battery as a power supply.

### Examples

Examples of the present disclosure are described below. The examples described below are illustrative, and are only used to explain the present disclosure, rather than being construed as limiting the present disclosure. Techniques or conditions are not indicated in the embodiments, and the embodiments are performed based on techniques or conditions described in documents in the art or based on the specification of the product. The reagents or instruments used without specifying the manufacturer(s) are conventional products that are commercially available.

### I. Preparation of a silicon-carbon composite material

### Example 1

1 kg of bamboo powder (as a carbon material precursor) was taken, 0.3 kg of a phosphoric acid solution (as a phosphoric acid substance) with a concentration of 10 wt% was added, the mixture was mixed uniformly by using a VC mixer, was allowed to stand for 24h, then was heated to 800°C at a heating rate of 5°C/min, and was insulated for 4 h to obtain a carbon matrix having a pore structure, and after a furnace was cooled, the carbon matrix was taken out for later use, where the mass ratio of the carbon material precursor to the phosphoric acid substance was 100: 5, the mass proportion of the aluminum element in the carbon material precursor was 60 ppm, the mass proportion of the potassium element was 65 ppm, the average pore diameter of the carbon matrix was 1.8 nm, the proportion of quantity of the micropores was 80%, the proportion of quantity of the mesopores was 20%, and the specific surface area of the carbon matrix was 1600 m²/g;
the carbon matrix was placed in a fluidized bed deposition furnace, heated to 500°C at a heating rate of 5°C/min, and a mixed gas was introduced at a volume ratio of monosilane (as a silicon source) to nitrogen (as a first protective gas) of 2: 8, with a total gas flow rate of 5 L/min, and the pressure in the furnace was controlled to be slightly higher than the atmospheric pressure of 200 Pa, and deposition was performed for 4 h; and
the introduction of monosilane was stopped, the mixture was continuously heated to 600°C, a mixed gas was introduced according to a volume ratio of acetylene (as a second carbon source) to nitrogen (as a second protective gas) of 4: 6 for deposition for 2h, and after cooling, the material was discharged and sieved to obtain a silicon-carbon composite material. In the silicon-carbon composite material, the silicon-based material (elemental silicon) is deposited in the pore structure of the carbon matrix, the mass proportion of the silicon element in the silicon-carbon composite material is about 50%, the content of the phosphorus element is about 4 ppm, the content of the aluminum element is about 30 ppm, the content of the potassium element is about 32 ppm, the grain size of the deposited silicon is about 2 nm, and the volume-distributed particle size Dv50 of the silicon-carbon composite material is about 7.8 µm.

The preparation methods of Examples 2 to 9 and Example 1 are similar, and the differences are detailed in Table 1.

### Comparative Example 1

1 kg of phenolic resin (as a carbon material precursor) and 0.93 kg of a KOH solution with a concentration of 15 wt% were mixed uniformly, then the mixture was sintered under a nitrogen protective atmosphere, at a heating rate of 1°C/min and a heat treatment temperature of 800°C, the mixture was insulated for 4 h, and after cooling, the mixture was washed with water to remove impurities, and dried to obtain a carbon matrix for later use;
the carbon matrix was placed in a fluidized bed deposition furnace, heated to 500°C at a heating rate of 5°C/min, and a mixed gas was introduced at a volume ratio of monosilane (as a silicon source) to nitrogen (as a first protective gas) of 2: 8, with a total gas flow rate of 5 L/min, and the pressure in the furnace was controlled to be slightly higher than the atmospheric pressure of 200 Pa, and deposition was performed for 4 h; and
the introduction of monosilane was stopped, the mixture was continuously heated to 600°C, a mixed gas was introduced according to a volume ratio of acetylene (as a second carbon source) to nitrogen (as a second protective gas) of 4: 6 for deposition for 2h, and after cooling, the material was discharged and sieved by a 325-mesh sieve to obtain a silicon-carbon composite material.

### Comparative Example 2

The preparation method of Comparative Example 2 is similar to that of Example 1, and the difference is that no phosphorus source is added when the carbon matrix is prepared. 1 kg of bamboo powder (as a carbon material precursor) was taken, the mass proportion of the aluminum element in the carbon material precursor was 60 ppm, the mass proportion of the potassium element was 65 ppm, 340g of a KOH solid was added, the mixture was mixed uniformly using a VC mixer, allowed to stand for 24 h, then heated to 800°C at a heating rate of 5°C/min, and insulated for 4 h to obtain a carbon matrix having a pore structure, and after the furnace was cooled, the carbon matrix was taken out for later use;
the carbon matrix was placed in a fluidized bed deposition furnace, heated to 500°C at a heating rate of 5°C/min, and a mixed gas was introduced at a volume ratio of monosilane (as a silicon source) to nitrogen (as a first protective gas) of 2: 8, with a total gas flow rate of 5 L/min, and the pressure in the furnace was controlled to be slightly higher than the atmospheric pressure of 200 Pa, and deposition was performed for 4 h; and
the introduction of monosilane was stopped, the mixture was continuously heated to 600°C, a mixed gas was introduced according to a volume ratio of acetylene (as a second carbon source) to nitrogen (as a second protective gas) of 4: 6 for deposition for 2h, and after cooling, the material was discharged and sieved to obtain a silicon-carbon composite material.

Parameter settings in the above Examples are shown in Table 1.

**Table 1**

| No. | Preparation process | | | | | |
|---|---|---|---|---|---|---|
| | Carbon material precursor type | Content of K in precursor | Content of Al in precursor | Added mass /kg of carbon material precursor | Phosphorus-containing compound | Mass ratio of carbon material precursor to phosphorus-containing compound |
| Example 1 | Bamboo powder | 65 | 60 | 1 | Phosphoric acid | 100: 3 |
| Example 2 | Bamboo powder | 65 | 60 | 1 | Phosphoric acid | 100: 7 |
| Example 3 | Bamboo powder | 65 | 60 | 1 | Phosphoric acid | 100: 12 |
| Example 4 | Bamboo powder | 65 | 60 | 1 | Phosphoric acid | 100: 14 |
| Example 5 | Bamboo powder | 65 | 60 | 1 | Phosphoric acid | 100: 19 |
| Example 6 | Bamboo powder | 65 | 60 | 1 | Phosphoric acid | 100: 22 |
| Example 7 | Coconut shells | 56 | 50 | 1 | Phosphoric acid | 100: 11 |
| Example 8 | Coconut shells | 70 | 75 | 1 | Phosphoric acid | 100: 11 |
| Example 9 | Coconut shells | 60 | 68 | 1 | Phosphoric acid | 100: 11 |

The phosphorus element content, the potassium element content, the aluminum element content, the silicon grain size, and the volume-distributed particle size Dv50 of the silicon-carbon composite material prepared in each of the above Examples and Comparative Examples are measured, and the results are shown in Table 2.

It should be noted that the phosphorus element content, the potassium element content, and the aluminum element content in the silicon-carbon composite material mentioned above are measured by using the following method: 0.5g of a silicon-carbon composite material sample is subjected to microwave digestion with 10 mL of nitric acid and 10 mL of hydrofluoric acid, and after the digestion, the sample is placed in a 50 mL volumetric flask to fix the volume, and then the content of the target element is measured by ICAP-7000 ICP-OES.

The grain size of the silicon-based material mentioned above is obtained by characterization by a transmission electron microscope.

The volume-distributed particle size Dv50 of the silicon-carbon composite material mentioned above is measured by using a laser particle size analyzer Malvern Master Size 3000 with reference to standard GB/T 19077-2016.

### II. Preparation of a secondary battery (full battery)

### 1. Negative electrode sheet

The silicon-carbon composite material prepared above, a conductive agent carbon nanotube and SP mixture, a binder styrene-butadiene rubber, and a thickener sodium carboxymethyl cellulose were fully stirred and mixed in an appropriate amount of a solvent of deionized water at a weight ratio of 95.5: 1: 2: 1.5 to form a negative electrode slurry. The negative electrode slurry was uniformly coated on two surfaces of a negative electrode current collector copper foil, dried, and cold pressed to obtain the negative electrode sheet.

### 2. Positive electrode sheet

The positive electrode active material LiNi_{0.8}Co_{0.1}Mn_{0.1}O₂ (NCM811) was mixed with conductive carbon black and polyvinylidene fluoride at a weight ratio of 97.5: 1.2: 1.3, an appropriate amount of a solvent NMP was added, and the mixture was stirred uniformly to obtain a positive electrode slurry. The positive electrode slurry was uniformly coated on two surfaces of a positive electrode current collector copper foil, dried, and cold pressed to obtain the positive electrode sheet.

### 3. Electrolyte solution:

A mixed solution of ethylene carbonate (EC), ethyl methyl carbonate (EMC), and diethyl carbonate (DEC) was taken as an organic solvent, where the volume ratio of EC, EMC, and DEC is 20: 20: 60. In an argon atmosphere glove box with a water content <10 ppm, a sufficiently dried lithium salt (LiPF₆) was dissolved in the organic solvent and an additive fluoroethylene carbonate (FEC) was added to obtain an electrolyte solution. In the electrolyte solution, the concentration of LiPF₆ is 1 mol/L, and the mass proportion of the FEC in the electrolyte solution is 5%.

### 4. Separator

A polyethylene film is used as a separator.

### 5. Preparation of a secondary battery

The separator, the positive electrode sheet, and the negative electrode sheet prepared above were stacked in order, such that the separator was located between the positive electrode sheet and the negative electrode sheet to play a separating role, and then the three items were wound to obtain an electrode assembly; and the electrode assembly was placed into an outer package, dried, then injected with the electrolyte solution prepared above, and is subject to procedures such as vacuum sealing, standing, formation, and volume-fixing to obtain the secondary battery.

### III. Battery performance test

### 1. Cycle performance test

At 25°C, the secondary battery prepared above was charged to 4.25 V at 0.5C and then discharged to 2.5 V at 1C, which was a charge and discharge cycle, and the discharge capacity at this time was recorded as the initial discharge capacity. The secondary battery was subjected to a cyclic charge-discharge test according to the method described above, the discharge capacity after each cycle was recorded until the discharge capacity of the secondary battery was attenuated to 80% of the first-cycle discharge capacity, and the cycle number at this time was recorded. The results are shown in Table 2.

**Table 2**

| No. | Silicon-carbon composite material product | | | Cycle performance of battery/ (cycles) |
|---|---|---|---|---|
| | Phosphorus element content (ppm) | K Element content (ppm) | Aluminum element content (ppm) | |
| Example 1 | 4 | 32 | 30 | 772 |
| Example 2 | 11 | 32 | 30 | 814 |
| Example 3 | 42 | 32 | 30 | 996 |
| Example 4 | 59 | 32 | 30 | 964 |
| Example 5 | 83 | 32 | 30 | 912 |
| Example 6 | 97 | 32 | 30 | 715 |
| Example 7 | 37 | 27 | 24 | 873 |
| Example 8 | 37 | 32 | 37 | 901 |
| Example 9 | 37 | 23 | 33 | 785 |
| Comparative Example 1 | / | 14 | / | 687 |
| Comparative Example 2 | / | 45 | 30 | 705 |

It can be seen from the comparison of the results of Examples 1 to 29 and Comparative Examples 1 to 2 that the silicon-carbon composite material of a specific structure of the present disclosure contains the phosphorus element, which effectively improves the cycle performance of the battery.

The above descriptions of the various embodiments tend to emphasize differences between the various embodiments. For same or similar parts thereof, refer to these embodiments. For brevity, details are not described herein again.

It should be noted that the present disclosure is not limited to the aforementioned embodiments. The aforementioned embodiments are merely examples, and any embodiment having substantially the same configuration as the technical concept and exhibiting the same operation and effect within the scope of the claims of the present disclosure is included in the technical scope of the present disclosure. In addition, various modifications that can be conceived by those skilled in the art may be made to the embodiments without departing from the subject matter of the present disclosure, and other embodiments constructed by combining some of the constituent elements in the embodiments are also included in the scope of the present disclosure.

## Claims

1. A silicon-carbon composite material, comprising:
a carbon matrix, wherein the carbon matrix has a pore structure; and
a silicon-based material, distributed in the pore structure of the carbon matrix, wherein
the silicon-carbon composite material contains a phosphorus element.

2. The silicon-carbon composite material according to claim 1, wherein a mass proportion of the phosphorus element in the silicon-carbon composite material is 5 ppm to 80 ppm, optionally 10 ppm to 50 ppm.

3. The silicon-carbon composite material according to any one of claims 1 to 2, wherein the silicon-carbon composite material contains at least one of an aluminum element and a potassium element.

4. The silicon-carbon composite material according to any one of claims 1 to 3, wherein the silicon-carbon composite material further contains the aluminum element and the potassium element, and a mass proportion of the aluminum element in the silicon-carbon composite material is less than a mass proportion of the potassium element in the silicon-carbon composite material.

5. The silicon-carbon composite material according to any one of claims 1 to 4, wherein the silicon-carbon composite material further contains the aluminum element, and a mass proportion of the aluminum element in the silicon-carbon composite material is 5 ppm to 80 ppm, optionally 10 ppm to 40 ppm.

6. The silicon-carbon composite material according to any one of claims 1 to 5, wherein the silicon-carbon composite material further contains the potassium element, and a mass proportion of the potassium element in the silicon-carbon composite material is 5 ppm to 80 ppm, optionally 10 ppm to 70 ppm.

7. The silicon-carbon composite material according to any one of claims 1 to 6, wherein the silicon-based material has one or more of the following features:
(1) a grain size of the silicon-based material has is ≤8 nm, optionally ≤5 nm, and more optionally 1 nm to 4 nm;
(2) the silicon-based material comprises one or more of elemental silicon, a silicon oxide compound, a silicon-carbon compound, and a silicon alloy; and
(3) a shape of the silicon-based material comprises one or more of a spherical shape, a spheroidal shape, a sheet shape, and a linear shape.

8. The silicon-carbon composite material according to any one of claims 1 to 7, wherein the carbon matrix comprises one or more of the following features:
(1) an average pore diameter of the pore structure is 0.5 nm to 8 nm, optionally 0.5 nm to 5 nm;
(2) the pore structure comprises micropores, and an average pore diameter d1 of the micropores satisfies 0.5 nm≤d1<2 nm;
(3) the pore structure comprises mesopores, and an average pore diameter d2 of the mesopores satisfies 2 nm≤d2≤8 nm;
(4) the pore structure comprises micropores, and the number of the micropores in the pore structure is 60% to 90%, optionally 70% to 80%; and
(5) a specific surface area of the carbon matrix is 500 m²/g to 2,000 m²/g, optionally 1,000 m²/g to 1,800 m²/g.

9. The silicon-carbon composite material according to any one of claims 1 to 8, wherein the silicon-carbon composite material comprises one or more of the following features:
(1) a volume-distributed particle size Dv50 of the silicon-carbon composite material is 3 µm to 15 µm, optionally 5 µm to 12 µm;
(2) the volume-distributed particle size Dv90 of the silicon-carbon composite material is ≤35 µm, optionally 15 µm to 25 µm;
(3) a particle size distribution of the silicon-carbon composite material satisfies 1≤(Dv90-Dv10)/Dv50≤3, optionally 1≤(Dv90-Dv10)/Dv50≤2;
(4) a specific surface area of the silicon-carbon composite material is 1 m²/g to 10 m²/g, optionally 2 m²/g to 6 m²/g;
(5) a tap density of the silicon-carbon composite material is 0.8 g/cm³ to 1.2 g/cm³, optionally 0.85 g/cm³ to 1.0 g/cm³;
(6) powder resistivity of the silicon-carbon composite material at 16 MPa is ≤5Ω·cm, optionally ≤2Ω·cm; and
(7) a mass proportion of the silicon element in the silicon-carbon composite material is 20% to 60%, optionally 30% to 50%.

10. The silicon-carbon composite material according to any one of claims 1 to 9, wherein at least a part of a surface of the silicon-carbon composite material is provided with a coating layer, and the coating layer is a carbon coating layer.

11. The silicon-carbon composite material according to claim 10, wherein the carbon coating layer has one or more of the following features:
(1) a material of the carbon coating layer comprises amorphous carbon; and
(2) a thickness of the carbon coating layer is 50 nm to 200 nm.

12. The silicon-carbon composite material according to any one of claims 10 to 11, wherein the phosphorus element is distributed in the carbon matrix.

13. The silicon-carbon composite material according to any one of claims 10 to 12, wherein at least one of the aluminum element and the potassium element is distributed in the carbon matrix.

14. A method for preparing the silicon-carbon composite material according to any one of claims 1 to 13, comprising the following steps:
mixing a carbon material precursor with a phosphorus-containing compound and sintering the mixture to prepare a carbon matrix having a pore structure; and
depositing the silicon-based material in a pore structure of the carbon matrix to prepare the silicon-carbon composite material.

15. The method for preparing the silicon-carbon composite material according to claim 14, wherein a mass ratio of the carbon material precursor to the phosphorus-containing compound is 100:(3-15), optionally 100:(4-10).

16. The method for preparing the silicon-carbon composite material according to any one of claims 14 to 15, wherein a temperature for the sintering is 600°C to 1000°C, optionally 600°C to 900°C.

17. The method for preparing the silicon-carbon composite material according to any one of claims 14 to 16, wherein time for the sintering is 1 h to 12 h, optionally 4 h to 8 h.

18. The method for preparing the silicon-carbon composite material according to any one of claims 14 to 17, wherein conditions for preparing the carbon matrix comprise one or more of the following conditions:
(1) the mixing the carbon material precursor with the phosphorus-containing compound comprises mixing the carbon material precursor with a solvent containing the phosphorus-containing compound, wherein the carbon material precursor is mixed with the solvent containing the phosphorus-containing compound and allowed to stand, and a standing time is 12 h to 24 h;
(2) the phosphorus-containing compound comprises one or more of phosphoric acid, potassium phosphate, sodium phosphate, calcium dihydrogen phosphate or potassium dihydrogen phosphate;
(3) the carbon material precursor comprises one or more of biomass hard carbon or a resin-based carbon material;
(4) the carbon material precursor comprises at least one of an aluminum element or a potassium element; and
(5) an atmosphere of the sintering comprises one or more of an inert gas and nitrogen.

19. The method for preparing the silicon-carbon composite material according to any one of claims 14 to 18, wherein the carbon material precursor comprises the aluminum element, and a mass proportion of the aluminum element in the carbon material precursor is 5 ppm to 80 ppm, optionally 6 ppm to 60 ppm.

20. The method for preparing the silicon-carbon composite material according to any one of claims 14 to 19, wherein the carbon material precursor comprises the potassium element, and a mass proportion of the potassium element in the carbon material precursor is 5 ppm to 80 ppm, optionally 6 ppm to 60 ppm.

21. The method for preparing the silicon-carbon composite material according to any one of claims 14 to 20, wherein the step of depositing the silicon-based material layer in the pore structure of the carbon matrix comprises:
placing the carbon matrix in a mixed gas containing a silicon source and a first protective gas, and performing first vapor deposition to deposit the silicon-based material in the pore structure of the carbon matrix.

22. The method for preparing the silicon-carbon composite material according to claim 21, wherein the first vapor deposition comprises one or more of the following conditions:
(1) a temperature of the first vapor deposition is 400°C to 800°C, optionally 500°C to 700°C, and more optionally 500°C to 600°C;
(2) time for the first vapor deposition is 1 h to 12 h, optionally 4 h to 8 h;
(3) a volume proportion of the silicon source in the mixed gas is 10% to 50%;
(4) a volume proportion of the first protective gas in the mixed gas is 30% to 85%;
(5) a positive difference between a pressure of the first vapor deposition and an atmospheric pressure is 200 Pa to 600 Pa;
(6) the silicon source gas comprises one or more of monosilane, disilane, and trisilane; and
(7) the first protective gas comprises one or more of nitrogen and argon.

23. The method for preparing the silicon-carbon composite material according to any one of claims 21 to 22, wherein the mixed gas further comprises a first carbon source, a volume proportion of the first carbon source in the mixed gas is 5% to 20%, a volume ratio of the silicon source to the first carbon source is (2-10): 1, and the first carbon source comprises one or more of methane, ethylene, and acetylene.

24. The method for preparing the silicon-carbon composite material according to any one of claims 14 to 23, wherein after the step of depositing the silicon-based material in the pore structure of the carbon matrix, the method further comprises:
placing the carbon matrix in a mixed gas containing a second carbon source and a second protective gas, and performing second vapor deposition to form the carbon coating layer on at least a part of an outer surface of the carbon matrix.

25. The method for preparing the silicon-carbon composite material according to claim 24, wherein the second vapor deposition comprises one or more of the following conditions:
(1) a temperature for the second vapor deposition is 500°C to 900°C;
(2) time for the second vapor deposition is 1 h to 6 h;
(3) a volume proportion of the second carbon source in the mixed gas is 5% to 50%, and the sum of the volume proportion of the second carbon source and the volume proportion of the second protective gas in the mixed gas is 100%;
(4) the second carbon source comprises one or more of methane, ethylene and acetylene; and
(5) the second protective gas comprises one or more of nitrogen and argon.

26. A negative electrode sheet, comprising:
a negative electrode current collector; and
A negative electrode active material layer, located on at least one side of the negative electrode current collector, wherein the negative electrode active material layer comprises the silicon-carbon composite material according to any one of claims 1 to 13 or the silicon-carbon composite material prepared by the method according to any one of claims 14 to 25.

27. A secondary battery, comprising the negative electrode sheet according to claim 26.

28. An electrical device, comprising the secondary battery according to claim 27.
